# EUROPEAN PATENT SPECIFICATION

(11) **EP 1 287 739 B1**
(45) Date of publication and mention of the grant of the patent: **17.05.2006**
(21) Application number: 02018255.6
(22) Date of filing: 22.08.2002
(51) Int. Cl.: A01N 25/22

(54) **Water dispersible starch based physical form modification of agricultural agents**
Wasserdispergierbare, modifizierte Stärke enthaltende landwirtschaftliche Mittel mit veränderter physikalischer Form
Agents d'agriculture à base d'amidon dispersibles dans l'eau ayant une forme physique modifiée

(30) Priority: 24.08.2001 US 938376
(43) Date of publication of application: 05.03.2003
(73) Proprietor: National Starch and Chemical Investment Holding Corporation, New Castle, Delaware 19720 (US); ICI Americas Inc., Bridgewater, NJ 08807 (US)
(72) Inventor: Hartmann, Frank D.J., Wilmington, Delaware 19808 (US); Eden, James L., East Millstone, New Jersey 08875-2051 (US); Solarek, Daniel B., Hillsborough, New Jersey 08844 (US); Rommens, Johan C.G., 3078 Kortenberg (BE); Mahroussa, I. Auda, 9051 Sint Denijs Westrem (BE)
(74) Representative: Hagemann, Heinrich

(56) References cited:
- EP-A- 0 352 010
- EP-A- 0 565 354
- EP-A- 0 699 389
- WO-A-89/12449
- WO-A-95/10184
- US-A- 4 277 364
- DATABASE WPI Week 198131 Derwent Publications Ltd., London, GB; AN 1981-56161D XP002217398 & JP 56 072902 A (KATAYAMA KAGARU KOGYO KENKYUSH), 17 June 1981 (1981-06-17)
- DATABASE WPI Week 199625 Derwent Publications Ltd., London, GB; AN 1996-246847 XP002217399 & JP 08 099804 A (SANKYO CO LTD), 16 April 1996 (1996-04-16)
- DATABASE WPI Week 199413 Derwent Publications Ltd., London, GB; AN 1994-106702 XP002217400 & JP 06 056603 A (HODOGAYA CHEM IND CO LTD), 1 March 1994 (1994-03-01)
- DATABASE WPI Week 199349 Derwent Publications Ltd., London, GB; AN 1993-392542 XP002217401 & JP 05 294802 A (TAKEDA CJEM IND LTD), 9 November 1993 (1993-11-09)
- DATABASE WPI Week 199544 Derwent Publications Ltd., London, GB; AN 1995-340146 XP002217402 & JP 07 233015 A (HOKKO CHEM IND LTD), 5 September 1995 (1995-09-05)
- DATABASE WPI Week 199502 Derwent Publications Ltd., London, GB; AN 1995-011712 XP002217403 & JP 06 298604 A (SUMIMOTO CHEM CO LTD), 25 October 1994 (1994-10-25)

## Description

This invention relates to water dispersible, stable, solid products or formulations of selected pregelatinized or gelatinized starches, active agricultural agents, and surfactants and/or adjuvants. These solid products are readily water soluble or dispersible. Furthermore, these products have a pregelatinized or gelatinized starch matrix or carrier structure which changes the physical form of the product, makes it compatible when dispersed, allows for a high loading of active material and permits use of a broad range of surfactants, adjuvants and other ingredients. Furthermore and surprisingly, it has been found that such pregelatinized or gelatinized starch containing agrochemical products can exhibit increased biological efficacy of the active material.

Various formulations of agricultural active ingredients have been developed to satisfy the needs for agricultural crop protection and other related areas. Oftentimes these products have been in the form of liquid formulations.

Recently, in crop protection formulation technology there has been a desire to move away from liquid formulations to solid products such as dry granules or powders. Such solid products would reduce the use of solvents, be more environmentally friendly and reduce transportation costs. However, the ability to provide solid products using a combination of active ingredients such as glyphosate, and surfactants such as polyoxyethylene sorbitan esters, e.g. Tween 20, has been difficult because such materials are not compatible and are not easy to process or work with. Although much effort has been made to develop solid agricultural products, most of the useful solid, starch based products exhibit extended or delayed release characteristics.

EP-A-0 565 354 describes a pesticidal composition comprising (a) at least one pesticidally active ingredient, (b) at least one surface active agent, (c) at least one carbonate, (d) at least one solid acid, (e) at least one talc, calcium stearate, magnesium stearate and titanium oxide, (f) and at least one of the low-substituted hydroxypropyl cellulose, carbxymethyl cellulose, calcium carboxymethyl cellulose, cross-linked sodium carboxymethyl cellulose and cross-linked carboxymethyl starch, wherein at least one of the components (c) and (d) is water soluble.

WO 89/12449 discloses a variable time-release herbicidal or herbicidal/pesticidal delivery composition for controlling a population of aquatic and wetland plants (weeds) or related vegetation in dry, moist, semi-aquatic, or aquatic environments.

EP-A-0 699 389 describes a dry pesticidal composition containing an active ingredient for controlling pests, a surfactant, a modified starch, a carbonate and a solid acid, wherein the constituents of the composition are combined together by means of a water-soluble polymer which is soluble in a volatile solvent.

WO 95/10184 discloses a non-toxic biodegradable pesticide composition comprising as an active substance a modified starch having a reduction number between 2 and 10, preferably between 4 and 7, which is the product of an acid/thermic hydrolysis of natural starches, especially potato starch, with interruption of the hydrolysis by rapid cooling.

JP-A-56072902 discloses a paste composition for wood showing antiseptic and insecticidal effect comprising a surfactant, a paste-stabiliser such as an esterified starch and antiseptics/insecticides.

JP-A-08099804 discloses agrochemical granules comprising a spreading accelerator (surfactant), an emulsifying agent, preferably 2-(2-octenyl)-sodium succinyl-modified starch and an agrochemical.

JP-A-06056603 describes herbicidal granules and tablets comprising a herbicidally active component, a surfactant, and 2-85 wt. % of a water-absorbing resin, such as polyacrylic acid starch.

JP-A-05294802 discloses agrochemical formulations comprising a nonionic surfactant, such as polyoxyethylene nonylphenyl ether, a fungicide and a fine powder having a film-forming ability, such as a lower viscose modified starch or generally a modified starch with 0.1-10 wt% of the total amount.

JP-A-07233015 describes a water-dispersible composition comprising an agrochemical active ingredient, water-soluble saccharides and modified starches, and non-ionic/anionic surfactant, such as polyoxyethylene sorbitan fatty acid ester among other components.

JP-A-06298604 discloses agricultural chemical tablets which contain active ingredients which are either a pest control, or a plant growth active ingredient, a carbonate and a solid acid.

US-A-4 277 364 discloses encapsulated biological active ingredients formulations comprising a matrix of xanthate-modified starches or derivatives thereof and any type of pesticides.

EP-A-0 352 010 discloses a pesticidal composition comprising a dextrinised starch and at least one surface active agent.

U.S. Patent No. 6,228,807 issued on May 8, 2001 to M. Kuchikata et al, discloses dry, water-soluble herbicidal compositions of glyphosate with selected surfactants. While such compositions are water dispersible, it is difficult to form compatible solutions since many surfactants are not compatible with glyphosate in concentrated form.

Despite the various disclosures of active agricultural products, including the recent '807 patent noted above, and solid products showing extended release properties, there is still the need for solid agricultural type products which are water dispersible, compatible when dispersed and exhibit quick release characteristics.

Accordingly, what is desired for use in agricultural applications, is a stable, solid product which has quick release properties, provides high load of active materials and can combine multiple components into a compatible system.

Now it has been found that stable, water dispersible solid products of agricultural active agents are provided when combined with selected pregelatinized or gelatinized starches and optionally surfactants and/or adjuvants.

This invention is directed to a stable, solid formulation comprising:
- a pregelatinized or gelatinized, chemically modified starch having film and/or matrix forming properties for binding the remaining ingredients, and
- a biologically active agricultural material,
- wherein from 30% to 70% by dry weight of starch is used in forming the formulation, and
- wherein from 30% to 70% by dry weight of remaining ingredients are used in forming the formulation,
- the formulation being readily dispersible in water and compatible when dispersed in water.

The invention also concerns an aqueous dispersion comprising said stable, solid formulation which contains a biologically active agricultural material.

Further, the invention is directed to a stable, solid formulation comprising a pregelatinized or gelatinized, chemically modified starch having film and/or matrix forming properties for binding the remaining ingredients, and a surfactant or non-oil adjuvant, wherein from 30% to 70% by dry weight of starch is used in forming the formulation, and wherein from 30% to 70% by dry weight of remaining ingredients are used in forming the formulation, the formulation being readily dispersible in water and compatible when dispersed in water.

This invention further involves agrochemical formulations containing combinations of two or more active materials.

This invention involves stable, water dispersible solid products of selected pregelatinized or gelatinized starches, agricultural active agents, and surfactants and/or adjuvants. These dry solid products or formulations are rapidly dispersed in aqueous medium, compatible when dispersed and provide quick release of the bioactive agent. These formulations also provide a high loading of the active ingredient and have been found especially useful in agricultural crop protection. Furthermore, the solid product of this invention has a starch matrix which allows for the use of one or more different active materials and the use of a wide variety of surfactants, adjuvants and other ingredients while still providing a compatible dispersion and high load capacity.

Stable, solid products are those where there is no bleeding or separation of individual components. Generally a product is considered stable when this condition exists for at least six months.

Dispersible, solid products are those which are functionally uniform or homogeneous when dispersed. The dispersed or water solubilized product may be in the form of a solution, emulsion or suspension.

Compatible solutions are those where the individual components remain homogeneous in the final aqueous solution. Compatible emulsions in water are those that remain stable, do not coalesce, phase out or separate, flocculate, aggregate or produce sediment. For compatible suspensions in water, the solids remain homogeneously suspended in the end use dispersion, i.e. they do not drop out. The compatible solutions or dispersions provide relatively or functionally uniform distributions of the components in the end use liquid. Compositions are typically considered compatible when these conditions exist for at least 4 hours and more particularly 24 hours or more.

Rapidly or readily dispersible is defined as a mixture with cold water and minimal agitation that gives a dispersion in less then 10 minutes, more particularly less then 3 minutes.

Solid products are those such as the type having a particulate form or structure and having a wide range of sizes and shapes, such as powders, granules (dust free powders), flakes, chips, sheets, tablets, pellets, agglomerates, etc.

The solid product or formulation of this invention will comprise either the combination of pregelatinized or gelatinized starch, active material and surfactant and/or adjuvant; pregelatinized or gelatinized starch and active material; or pregelatinized or gelatinized starch and surfactant and/or adjuvant. Any of the above formulations may also include optional additive ingredients.

The active ingredients used in the system or formulations of this invention include a broad range of materials and this includes active ingredients some of which don't form free standing powders on their own. Some of the useful active materials may be liquid while others may be solids with low or high melting points. Particularly useful active ingredients for this invention are liquids at room temperature or low melting (e.g. <80°C) materials and high melting (e.g. >80°C) crystalline materials.

The agricultural active agents which are used in the formulations of this invention can be any one or more of a wide range of water dispersible agrochemically active materials. Description of the actives as water dispersible means that they are water soluble or can be suspended or emulsified in water. More particularly, it may be one or more herbicides, pesticides, for example insecticides, fungicides, acaricides, nematocides, miticides, rodenticides, bactericides, mollusicides and bird repellants, and/or plant growth regulators. Especially useful active materials are herbicides, insecticides and fungicides. Usually, the active material will be a water insoluble or immiscible material, although granules can be made including water soluble active materials. Specific examples of active materials include:
Herbicides such as 6-chloro-N-ethyl-N-(1-methylethyl)-1,3,5-triazine-2,4-diamine (common name atrazine); N,N'-bis(1-methylethyl)-6-(methylthio)-1,3,5-triazine-2,4-diamine (common name prometryn); substituted ureas such as diuron or N'-(3,4-dichlorophenyl)-N,N-dimethylurea); sulfonyl ureas such as metsulfuron-methyl{2-[[[[(4-methoxy-6-methyl-1,3,5-triazin-2-yl) amino]carbonyl]amino]sulfonyl]benzoate}; triasulfuron {2-(2-chloroethoxy)-N-[[(4-methoxy-6-methyl-1,3,5-triazin-2-yl)amino]carbonyl]benzenesulfonamide}; tribenuron-methyl {methyl 2-[[[[(4-methoxy-6-methyl-1,3,5-triazin-2yl)-methylamino]carbonyl]amino]sulfonyl]benzoate} and chlorsulfuron {2-chloro-N-[[(4-methoxy-6-methyl-1,3,5-triazin-2-yl)amino]carbonyl] benzenesulfonamide}; bis-carbamates such as phenmedipham or {3-[(methoxycarbonyl)amino] phenyl (3-methylphenyl)carbamate}, aryloxyalkanoic acids like [(3,5,6-trichloro-2 pyridinyl)oxy] acetic acid (commonly known as triclopyr) and its salts or esters like triclopyr-triethanolammonium, triclopyr-butotyl, (2,4 dichlorophenoxy) acetic acid (commonly known as 2,4-D) and its salts or esters like 2,4-D butyl, 2,4-D-dimethylammonium, 2,4-D-diolamine, 2,4-D-2-ethylhexyl, 2,4-D-isooctyl, 2,4-D-isopropyl, [(4-amino-3,5-dichloro-6-fluoro-2-pyridinyl)oxy] acetic acid (commonly known as fluoropyr) and its esters like furoxypyr-meptyl and fluroxypyr-2-butoxy-1-methylethyl, 2-(4-aryloxyphenoxy) propionic acids like butyl (+/_)-2-[[5-(trifluoromethyl) 2 pyridinyl]oxy]phenoxy]-propanoate (commonly known as fluazifop-butyl), (+/_)-2-[4-[[3-chloro-5-(trifluoromethyl)-2-pyridinyl]oxy]phenoxy]propanoic acid (commonly known as haloxyfop) and its esters haloxyfop-etotyl, haloxyfop-methyl, haloxyfop-P-methyl, butyl (R)-2-[4-(4-cyano-2-fluorophenoxy) phenoxy]propionate (commonly known as cyhalofop-butyl), cyclohexanedione oximes like (+/_)-(EZ)-2-(1-ethoxyiminobutyl)-5-[2-(ethylthio)propyl]-3-hydroxycylohex-2-enone (commonly known as sethoxydim). Additional useful herbicides include alpha-chloro-2', 6'-diethyl-N-methoxymethyl acetanilide (commonly known as alachlor), N-butoxymethyl-alpha-chloro-2',6'-diethylacetanilide (commonly known as butachlor), 2'-methyl-6'-ethyl-N-(1-methoxy-prop-2-yl)-2-chloroacetanilide (commonly known as metolachlor), isobutyl ester of (2,4-dichlorophenoxy) acetic acid, 2-chloro-N-(ethoxymethyl)-6'-ethyl-o-acetotoluidide (commonly known as acetochlor), 1-(1-cyclohexen-1-yl)-3-(2-fluorophenyl)-1-methyl urea, S-2,3,3-trichloro-allyl-diisopropyl thiocarbamate (commonly known as triallate), and alpha, alpha, alpha-trifluoro-2,6-dinitro-N,N-dipropyl-p-toluidine (commonly known as trifluralin).
Fungicides such as thiocarbamates, particularly alkylenebis(dithiocarbamate)s, for example maneb or {[1,2-ethanediylbis-[carbamodithiato] (2-)] manganese} and mancozeb or {[[1,2-ethanediyl-bis[carbamodithiato]](2-)] manganese mixture with [[1,2-ethanediylbis[carbamodithiato]] (2-)]zinc}; strobilurins such as azoxystrobin (methyl (E)-2-[[6-(2-cyanophenoxy)-4-pyrimidinyl]oxy]-a-(methoxymethylene) benzeneacetate} and kresoxim-methyl {(E)-a-(methoxyimino)-2-[(2-methylphenoxy)methyl]benzylacetic acid methyl ester}; dicarboximides such as iprodione {3-(3,5-dichlorophenyl)-N-isopropyl-2,4-dioxoimidazoline-1-carboxamide}; azoles such as propiconazole or {1-[2-(2,4-dichloro-phenyl)-4-propyl-1,3-dioxolan-2-yl-methyl-1H-1,2,4-triazole and tebuconazole or {(RS)-1-p-chlorophenyl-4,4-dimethyl-3-(1H-1,2,4-triazole-1-ylmethyl)-pentan-3-ol}; halophthalonitriles such as chlorothalonil pr {2,4,5,6-tetrachloro-1,3-dicyanobenzene}; and irorganic fungicides such as copper hydroxide or Cu(OH)2.
Insecticides including benzoyl ureas such as diflubenzuron or N-[[(4-chlorophenyl)amino]carbonyl]-2,6-difluorobenzamide; carbamates including solid and liquid forms such as carbaryl or 1-naphthyl methyl carbamate, aldicarb, methomyl, carbofuran, bendiocarb, oxamyl, thiodicarb, trimethylcarb; organophosphates e.g. malathion, parathion, demeton, dimethoate, chlorpyrifas, diazinon, azinphosmethyl and phosmet; compounds which break down an insect's digestive tract tissue including fluorine compounds (cryolite), zinc and mercury; nicotine; rotenone; neem oil or azadiractin; natural or synthetic pyrethrins, permethrin, lamda-cyhalothrin, cypermethrin, petroleum oils; and microbials e.g. bascillus thuringiensis and entomopathic viruses such as the bacculo virus.
Acaricides such as clofentezine or 3,6-bis(2-chlorophenyl)-1,2,4,5-tetrazine.

Among water soluble active materials, non-selective herbicides, particularly N-(phosphonomethyl) glycine type herbicides such as glyphosate and sulphosate, respectively the iso-propylamino and trimethylsulphonium salts of N-phosphonylmethyl glycine, and other salts such as ammonium, sodium and potassium; and phosphinyl amino acids such as glufosinate or 2-amino-4-(hydroxymethylphosphinyl)butanoic acid, particularly as the ammonium salt. Such water soluble actives can be used as the sole active in water dispersible granules or in combinations thereof, but can also be used in combination with water insoluble or immiscible actives in multi-active formulations.

The agrochemical formulation of this invention can include one or more surfactants and/or adjuvants and other additive ingredients. Surfactants have surface active properties and help to increase the dispersibility of the active material and/or can also act as an emulsifier, solubilizer, wetting agent or suspending agent. Adjuvants are materials that help to increase the biological efficacy of the active material and include surfactants, oils such as mineral oils, vegetable oils and alkyl esters of fatty acids, and combinations thereof. Other additive ingredients and materials can be used to provide a variety of functional attributes to the formulation and include materials such as buffering agents, rheological modifiers, antifoam / defoamers, drift /mist control agents, viscosifiers, emulsifiers, dispersants, suspending agents, solvents and fillers. One or more of such surfactants, adjuvants and other additves may be used and they are not limited by physical form such as liquid, paste or wax; or by being water soluble (i.e. from fully water soluble to water insoluble) or water dispersible (e.g. forming aqueous solutions, dispersions or emulsions). The surfactant or adjuvant may help increase the biological efficacy of the active material. The particular surfactant and/or adjuvants that are used in the formulation will depend on the active material and its properties.

The surfactant used in the formulation may be non-ionic, cationic, anionic, amphoteric or a blend or combination thereof. Exemplary non-ionic surfactants include alcohol alkoxylates, e.g. ethoxylates, particularly C8 to C18 alcohols which can be linear, branched or linear/branched mixtures; alkylamine alkoxylates, e.g. ethoxylates and particularly C8 to C18 alkylamines; sorbitol and sorbitan fatty acid esters, particularly C8 to C18 fatty acids esters and their ethoxylated derivatives; and chemically modified low molecular weight polysaccharides, particularly C6 to C14 alkyl polysaccharides such as alkylpolyglycosides. Other non-ionics include polyoxyethylene-polyoxypropylene block copolymers, glycerol esters, glycol esters, alkoxylated and non-alkoxylated sorbitan esters, sucrose esters, sucrose glycerides, polyoxyalkylene alkylaryl ethers, polyoxyalkylene alkyl esters and fatty acid ethoxylates.

Cationic surfactants that are useful include primary, secondary and tertiary alkylamines, tertiary polyoxyalkylene alkylamines, polyoxyalkylene and non-polyoxyalkylene alkylamine oxides, tertiary polyoxyalkylene alklyetheramines, polyoxyalkylene alkyletheramine oxides, and tetra alkylammonium halides.

Useful anionic surfactants include alkyl sulfates and phosphates, olein sulfonates, alkylaryl sulfonates, polyoxyalkylene alkylether sulfates and phosphates, sulfosuccinate derivatives, sulfosuccinates, sarcosinates, taurates, sulfates and sulfonates of oils.

Useful amphoteric surfactants include N-alkylbetaines, alkyl amidobetaines and imidazoline derivatives.

The selected pregelatinized or gelatinized starch component which are used in the solid products or formulations of this invention are chemically modified pregelatinized or gelatinized starches and more particularly are starch esters and starch ethers. The starch esters and starch ethers may contain nonionic or ionic substrate groups such as cationic, e.g. tertiary amine and quaternary ammonium groups, or anionic groups, and may be crosslinked. Modified starches of these types are described in "Starch: Chemistry and Technology", edited by R. L. Whistler et al, Chapter X, 1984. Preferred modified pregelatinized or gelatinized starches are those containing an ester or ether group. The base starch may be any starch, native or converted, and includes those derived from any plant source such as maize, tapioca, potato, wheat, rice, sago, sorghum, waxy maize, waxy potato and high amylose starch, i.e. starch having at least 40% by weight of amylose content. Also included are the conversion products derived from any of the former bases including, for example, dextrin prepared by hydrolytic action of acid and/or heat; oxidized starches prepared by treatment with oxidants such as sodium hypochlorite or hydrogen peroxide; and fluidity or thin boiling starches prepared by enzyme conversion or mild acid hydrolysis.

Modified starch esters include starch acetate, starch propionate, starch butyrate, starch hexanoate etc. as well as the half-esters of dicarboxylic acids, particularly the alkenylsuccinic acids. Starch ethers include the hydroxyalkyl ethers such as hydroxyethyl and hydroxypropyl starch. The starch esters and ethers used in this invention may be prepared by processes known in the art such as disclosed in "Starch: Chemistry and Technology", noted above.

The preparation of starch esters typically involves reacting pregelatinized or gelatinized starch with organic acid anhydrides such as acetic anhydride in either aqueous or non-aqueous systems, e.g. anhydrous pyridine. A review of such preparations may be found in "Starch: Chemistry and Technology", edited by R. L. Whistler et al, Chapter X, 1984, as well as in U. S. Patents 2,661,349 issued to C. Caldwell et al on December 1, 1953 and 5,321,132 issued to R. Billmers et al on June 14, 1994.

One modification of pregelatinized or gelatinized starch that is especially useful in this invention is a starch ester prepared from an organic acid anhydride having a hydrophobic group such as octenyl or dodecenyl succinic anhydride. More particularly, the hydrophobic group is a hydrocarbon group such as alkyl, alkenyl, aralkyl or aralkenyl having 2 to 22 carbons, preferably 5 to 18 and more preferably 8 to 12 carbons. Generally the pregelatinized or gelatinized starch will be treated with up to 60%, more particularly 1 to 60% and preferably 5 to 20% by weight of the anhydride, based on the weight of pregelatinized or gelatinized starch.

Another modification of pregelatinized or gelatinized starch that is especially useful in this invention is the etherification with alkylene oxides, particularly those containing 2 to 6, preferably 2 to 4 carbon atoms. Ethylene oxide, propylene oxide and butylene oxide are exemplary compounds that are useful in etherifying the starting pregelatinized or gelatinized starch materials. Although varying amounts of such reagent compounds may be used, generally up to 25%, more particularly 1 to 25% and preferably 1 to 10% by weight, based on the weight of pregelatinized or gelatinized starch, will be used.

The modified pregelatinized or gelatinized starches as used herein may be degraded or converted to achieve certain viscosity characteristics and allow for better interaction with components. The modified pregelatinized or gelatinized starches may also be crosslinked. The degraded pregelatinized or gelatinized starches can vary from 15 to 90 WF ( i.e. water fluidity). In addition, dextrins and/or multi-dextrins of <10 DE (dextrose equivalent) can be used. Degradation can be carried out using conventional processes such as oxidative hydrolysis including treatment with hydrogen peroxide, enzyme hydrolysis or acid hydrolysis. Such degradation can be performed either before or after modification is made to the pregelatinized or gelatinized starch.

The important feature of this invention is being able to provide an agrochemical formulation or surfactant and/or adjuvant system in the modified physical form of a stable, solid such as a free-flowing powder. This can be accomplished when using either a water soluble active material or a water insoluble active material, i.e. emulsifiable or suspendable oily or non-water soluble active materials. This can include mixtures of two or more different active materials such as two or more water soluble or two or more water insoluble active materials or combinations thereof. The active materials do not have to be of the same physical form, e.g. liquid or solid. The ability to do this is provided by use of the selected modified pregelatinized or gelatinized starches as defined herein. The pregelatinized or gelatinized starch provides a matrix for the system and changes the physical form thereby allowing for the use of different surfactants and adjuvants including those in aqueous solutions, oils, waxes, emulsions, etc. Additionally, while previously it has been difficult to incorporate liquid surfactants or adjuvants into the formation of solid products such as powders, the use of pregelatinized or gelatinized starch as described herein, has allowed for the use of such liquids as well as solid surfactants or adjuvants.

The dry solid can be made by dissolving or dispersing the active material, surfactant and/or adjuvant in a starch cook by either mixing the components with raw starch then cooking, e.g. jet cooking, or by mixing the components into cooked starch. Raw starch is generally refined and recovered from plant tissue as microscopic semi-crystalline particles termed granules. These raw granules must be disrupted or gelatinized, usually by heating in a water suspension or slurry, to produce a colloidal dispersion, solution or starch cook. Gelatinization in water or other solvent, is required to allow the starch cook to provide film or matrix forming properties after drying. A wide range of cooking processes are generally suitable, such as, atmospheric pressure batch cooking, elevated pressure batch cooking (autoclaving), steam injection cooking (jet cooking) at either theoretical or excess steam addition ratios, or non diluting heat transfer methods. See "Chemistry of the Carbohydrates", by W. W. Pigman and R. M. Goepp, Academic Press, 1948, p. 561f. Pre-gelatinized starches that do not require the cooking step before adding the starch to the surfactant and/or adjuvant can also be used. The pre-gelatinized starches are readily available and can be produced by many methods such as disclosed in U. S. Patents 4,280,851 issued to Pitchon et al. in July, 1981; 5,571,552 issued to Kasica et al. in November, 1996; 3,086,890 issued to Sarko et al. in April, 1963; 3,637,656 issued to Germino et al. in Jan., 1972 and 3,137,592 issued to Protzman et al. in June, 1964. These mixtures are then dried into a solid such as powder by spray drying or using other drying techniques such as drum drying, extrusion, belt drying or freeze drying.

In a similar manner, the solid product can be made by dissolving or dispersing a) the active material, or b) the surfactant and/or adjuvant in a starch cook by either mixing the components with raw starch and cooking or by mixing the components with cooked starch or pre-gelatinized starch. These mixtures are then dried into solids such as powders using drying techniques such as spray drying, drum drying, extrusion, belt drying or freeze drying. Also, similar products can be prepared with the addition of other additive materials to the components of the above described systems.

While the form of the solid pieces resulting from the process of preparation may be in various sizes and shapes, one particularly useful form are granules which are considered dustless or have particles with sizes of between about 250 to 800 microns. An especially useful process for drying the aqueous feedstock and obtaining dust free granules of useful diameters in one process step is disclosed in U. S. Patent 5,628,937 issued to Oliver et al.. Additional processing such as agglomeration, compact granulation or extrusion can be used, if desired, to attain a more specific particle size range.

The solid formulations of this invention are characterized by high loading of the active ingredient and rapid homogeneous dispersibility in aqueous medium. The amount of pregelatinized or gelatinized starch in the system can vary but generally will be less than about 85% by weight. There should be enough pregelatinized or gelatinized starch to make stable solid such as a free flowing powder.

The amount of active material and other components in the load which make up the formulation can vary. Load is defined as the total amount of active material, surfactant, adjuvant and optional other additive ingredients in the formulation. The formulation will comprise, on a dry basis, from 30 to 70% by weight of load and 30 to 70% by weight of pregelatinized or gelatinized starch. The percent (%) load is the anhydrous (dry) weight of the load divided by the anhydrous (dry) weight of the total formulation (i.e. load plus starch) x 100. The load may be comprised of from about 0 to 100% by weight of active, from about 0 to 100% by weight of surfactant and/or adjuvant, and from about 0 to 90% of other additive ingredients with the proviso that there be at least 10% by weight of active and/or surfactant and/or adjuvant with other additive ingredients. The load may also be completely comprised of active material or surfactant/adjuvant when only one of such components is present.

Any load component which is a non-water soluble liquid or meltable solid usually must be emulsified. The hydrophobically modified pregelatinized or gelatinized starches provide very useful emulsifying properties. Small particle emulsions allow higher loading of emulsified materials and remain as stable products when dried. Furthermore, smaller particle size may give increased efficacy of the active ingredients or improve the agricultural activity of the other ingredients.

The formulation of this invention as described herein may comprise more than one of the components, i.e. one or more active materials, surfactant/adjuvants and starch materials and combinations thereof. The different individual materials do not have to be of the same physical form (e.g. liquid or solid). The ability to be able to do this is due to the selected pregelatinized or gelatinized starch component which forms a matrix and helps provide a stable, compatible system even when using materials or components with different physical forms.

It is further noted that while the solid formulated product containing an active material, and/or surfactant/adjuvant in a pregelatinized or gelatinized starch matrix is a desired or preferred embodiment of this invention, this is because such solid product can be readily dispersed in water to conveniently, quickly and accurately provide a tank spray mixture for ready use in an agrochemical application. However, the components may be used separately without forming a solid or powder. Thus the individual components, i.e. active material, and/or surfactant/adjuvant can be added or combined separately in water along with the pregelatinized or gelatinized starch to form an aqueous dispersion (e.g. in a spray tank). These materials can be used in agrochemical applications or may have other uses apparent to one skilled in the art. One such application involves the combination of pregelatinized or gelatinized starch and surfactant which can be used as a soil or substrate wetting agent. The varied and different useful applications are derived in part from the pregelatinized or gelatinized starch component, which not only is useful as a matrix or solid carrier for the active material and other components but also helps to increase biological efficacy, i.e. it has adjuvant characteristics.

The aqueous dispersion, as noted above, containing pregelatinized or gelatinized starch and active material along with optional surfactant/adjuvant, can be formed by redispersing the solid product of the components or by adding the components together or separately in water. This aqueous dispersion containing the active material along with pregelatinized or gelatinized starch and optional surfactant/adjuvant has an increased biological efficacy. This makes the dispersion particularly useful as a herbicide, pesticide and plant growth regulator for applications to agricultural crops, vegetation, weeds, plants, insects, pests and soil. Particularly useful in providing biological efficacy are pregelatinized or gelatinized starches combined with glyphosate, such as glyphosate-isopropyl amine (IPA), and strobilurin, such as azoxystrobin, active materials. Especially useful combinations are pregelatinized or gelatinized starches combined with glyphosate-isopropyl amine (IPA) and polyoxyethylene sorbitan ester (Tween 20) and pregelatinized or gelatinized starches combined with azoxystrobin and non-ionic surfactants, (ethoxylated C8 to C18 alcohols).

Besides being used as a redispersed solid or by application from an aqueous dispersion, the pregelatinized or gelatinized starch containing products can also be used as a solid in dry form without dispersing in water. For example, the pregelatinized or gelatinized starch entrapped product can be broadcast onto soils as a powdered particulate or pest bait. Another embodiment of this invention involves a solid product containing a surfactant or adjuvant, particularly a non-oil adjuvant, in a pregelatinized or gelatinized starch matrix.

The water soluble pregelatinized or gelatinized starch containing solid of this invention, is a stable mixture which is compatible and quickly releases the active ingredient and adjuvants once dispersed in the spray or feed tank. These products have been found to provide a high loading of active ingredient and surfactant/adjuvant and also allow for use of a broad range of surfactant chemistries. Furthermore and surprisingly, use of these products result in beneficial properties such as increased biological activity and increased rainfastness.

The invention is further illustrated by the following examples with all parts and percentages given by weight and all temperatures in degrees Celsius, unless otherwise noted.

### EXAMPLE 1

Several samples of liquid alkyl (C8-C10) polyglycoside with different starches were prepared by making an aqueous feedstock solution, spray drying the feedstock and recovering the resulting powder.

The starches identified in Table 1 as samples A-F, were slurried in water and jet cooked in a model C-1 steam direct injection continuous cooker (National Starch & Chemical Co.) at about 140oC. The solids of the cooked starches A, B, and D-F were 30% while the solids of starch C was 20%. The polyglycoside amount, as shown in Table 1, was added to the cooled starch of each formula, mixed until uniform and then heated to about 50°C. Water was added, if required, to dilute the feed to a rheology and viscosity suitable for atomization. Samples were processed on a Bowen laboratory scale dryer (GEA Niro, Columbia, MD) using a rotary wheel atomizer. Dryer inlet temperatures were about 205 to 230°C and outlet temperatures were about 90 to 120°C.

In all cases the formed products were stable, free flowing and rapidly soluble powders. As further noted in the table below, relatively high loadings of up to 80% of the polyglycoside (APG) were formed into the water soluble, dry powder.

**Table 1 Formulations spay dried into powder**

| Sample | Starch(1) | Ratio starch/polyglycoside |
|---|---|---|
| A | waxy maize, OSA | 50/50 |
| B | waxy maize, OSA/dextrin | 50/50 |
| C | hydroxypropylated waxy maize (lightly degraded) | 50/50 |
| D | 3% OSA modified waxy maize | 32/68 |
| E | 3% OSA modified waxy maize | 20/80 |
| F | 5% OSA modified waxy maize | 20/80 |

| | | |
|---|---|---|
| (1) OSA - octenyl succinic anhydride | | |

### EXAMPLE 2

A tank spray mix solution was made by dissolving sample B from Example 1 in water and adding glyphosate-IPA (isopropyl amine) solution to give a ratio of glyphosate acid (acid equivalent - a.e.) to alkyl polyglycoside of 2 to 1. A control tank mix solution, without starch, was made by dissolving alkyl polyglycoside in water and adding glyphosate-IPA solution to give a ratio of glyphosate acid to alkyl polyglucoside of 2 to 1.

The tank mixes were prepared to deliver by spraying at two application rates as shown in Table 2, i.e. starch containing solutions F2 and F4 and non-starch containing control solutions F1 and F3.

**Table 2 Application Rates**

| Samples | Glyphosate | Glycoside | Starch |
|---|---|---|---|
| | (g a.e./ha) | (g/ha) | (g/ha) |
| F1 | 400 | 200 | - |
| F2 | 400 | 200 | 200 |
| F3 | 800 | 400 | - |
| F4 | 800 | 400 | 400 |

These formulations were applied by spraying onto plant weed species Barley and Malva sylvestris and the efficacy determined as % Kill (0% untreated control plants, 100% treated plants are dead) of the target weeds 7, 14 and 21 days after treatment (DAT). The results were compared with control samples F1 and F3 which did not contain the modified starch carrier. The results are shown below in Table 3 and the % fresh weight (amount of remaining plant tissue) was measured 25 DAT (days after treatment) and expressed as a percentage fresh weight compared to the untreated control.

**Table 3 % Kill**

| Samples | Barley | | | |
|---|---|---|---|---|
| | 7 DAT | 14 DAT | 21 DAT | % Fresh Weight |
| F1 | 42.9 | 42.9 | 82.1 | 12.2 |
| F2 | 25 | 39.3 | 85.7 | 11.9 |

| | Malva sylvestris | | | |
|---|---|---|---|---|
| F3 | 14.3 | 25 | 39.3 | 43.7 |
| F4 | 25 | 28.6 | 42.9 | 25.7 |

As shown in Table 3, the combination of starch and glycoside increased the biological efficacy resulting in increased % Kill and reduced % Fresh Weight.

### EXAMPLE 3

Samples of starch with different surfactants were formed into dry powders as in Example 1. The successfully formed powders were stable, non-sticky, dry powders that quickly dissolved in water and were compatible when dispersed. The formulations and amounts of starch and surfactant components are given below in Table 4.

**Table 4**

| Starch(1) | Surfactant(2) | Ratio starch/surfactant |
|---|---|---|
| Waxy maize-OSA | Tween 20 | 50/50 |
| " " " | Atplus MBA 1303 | 50/50 |
| Hydroxypropylated waxy maize (lightly degraded) | Tween 20 | 50/50 |
| Waxy maize-OSA/ dextrin | Altox MBA 13/15 | 50/50 |
| Waxy maize-OSA/ dextrin | Tween 20 | 50/50 |

| | | |
|---|---|---|
| (1) OSA - octenyl succinic anhydride | | |
| (2) Tween 20 - polysorbate 20 Atplus MBA 1303 - C12-C15 monobranched ethoxylated and propoxylated alcohol Altox MBA 13/15 - C12-C15 monobranched ethoxylated alcohol | | |

### EXAMPLE 4

Several sample formulations of glyphosate-IPA (isopropyl amine) salt, with different starches and adjuvant/surfactants were formed into free flowing powders as follows. The process used consisted of preparing an aqueous feedstock solution, spray drying the feedstock and recovering the resulting powder. In all cases the product was a stable, free flowing, rapidly soluble powder.

The starches identified in Tables 6 were slurried in water and jet cooked in a model C-1 steam direct injection continuous cooker (National Starch & Chemical Co.) at about 140°C. Solids of the cooked starches as well as other dryng conditions are show below in Table 5. The glyphosate and the adjuvant/surfactant for each formula (identified in Table 6) were added to the cooked starch which was mixed until uniform and then heated to about 50°C. Water was added, if required, to dilute the feed to a rheology and viscosity suitable for atomization.

**Table 5**

| Starch | Product Formulat. | Dryer | % Cook Solids | % Feedstock Solids | Feedstock-Viscosity cps |
|---|---|---|---|---|---|
| A | F1 | M | 10 | 23.5 | 150 |
| | F3 | M | 10 | - | - |
| | F5 | M | 10 | 21.8 | 215 |
| B | F6 | M | 20 | 28.0 | 7 |
| B | F2 | P | 20 | 36.2 | 17.0 |
| | F4 | P | 20 | 35.0 | 13.0 |
| C | F7 | P | 20 | 23.7 | 129 |
| | F8 | P | 20 | 28.4 | 244 |
| D | F9 | P | 20 | 32.7 | 371 |
| | F10 | P | 20 | 24.5 | 267 |
| E | F11 | P | 10 | 11.5 | 1924 |

Drying was done on two spray driers. Samples marked "M" in Table 5 were processed on a Mobile Minor laboratory scale dryer (GEA Niro, Columbia, MD) using a rotary wheel atomizer. Dryer inlet temperatures were about 205 to 230°C and outlet temperatures were about 90 to 120°C. Samples marked "P" in Table 5 were processed on a Production Minor pilot scale dryer (GEA Niro, Columbia, MD) using a rotary wheel atomizer. Dryer inlet temperatures were about 205 to 230°C and outlet temperatures ere about 90 to 120°C.

The different sample formulations F1-F11 are shown below in Table 6.

**Table 6 Dry Powder Sample Formulations (w/w %)**

| Samples | F1 | F2 | F3 | F4 | F5 | F6 | F7 | F8 | F9 | F10 | F11 |
|---|---|---|---|---|---|---|---|---|---|---|---|
| Glyphosate-IPA | 33.3 | 43,8 | 33.3 | 43.8 | 33.3 | 33.3 | 43.8 | 43.8 | 43.8 | 43.8 | 43.8 |
| Surfactants Tween20 | 16.7 | 16.2 | - | - | - | - | - | 16.2 | 16.2 | - | 16.2 |
| C8-10 poly glycoside | - | - | 16.7 | 16.2 | - | - | 16.2 | - | - | 16.2 | - |
| Atplus MBA 1303 | - | - | - | - | 16.7 | 16.7 | - | - | - | - | - |
| Starches(1) | | | | | | | | | | | |
| A | 50 | - | 50 | - | 50 | - | - | - | - | - | - |
| B | - | 40 | - | 40 | - | 50 | - | - | - | - | - |
| C | - | - | - | - | - | - | 40 | 40 | - | - | - |
| D | - | - | - | - | - | - | - | - | 40 | 40 | - |
| E | - | - | - | - | - | - | - | - | - | - | 40 |

| | | | | | | | | | | | |
|---|---|---|---|---|---|---|---|---|---|---|---|
| (1) A - hydroxypropylated waxy maize (lightly degraded) B - waxy maize octenyl succinic anhydride (OSA) C - 6% OSA modified waxy maize D - 5% OSA modified waxy maize E - cationic crosslinked waxy maize | | | | | | | | | | | |

All of the starch entrapped glyphosate-IPA/surfactant powder formulations shown above in Table 6 were applied to test plants and screened and compared to commercial liquid glyphosate-IPA/adjuvant (Roundup Ultra and Roundup Ultra Max) formulations. The starch powder formulations of Table 6 showed similar to improved biological bio-efficacy to the commercial liquid products.

### EXAMPLE 5

Several samples of the dry powder formulatons of this invention were prepared as in the above examples and dissolved or dispersed in water. The resulting dissolution times found in Table 7 show the ability of these powders to rapidly or quickly dissolve/disperse in water.

**Table 7**

| Sample | Starch(1) | Surfact./Adj. | Active | Wt. Ratio star/surf./adj./act. | Dissolution Time (3) |
|---|---|---|---|---|---|
| 1 | A | C8-10 alkyl polyglycoside | - | 80/20/- | >7' |
| 2 | B | " " " | - | 50/50/- | 5'45" |
| 3 | B | Tween 20 | - | 50/50/- | 2'30" |
| 4 | C | C8-10 alkyl polyglycoside | - | 68/32/- | 6'30" |
| 5 | D | " " " | - | 50/50/- | 4' |
| 6 | D | Tween 20 | - | 50/50/- | 1' |
| 7 | E | Atlox MBA 13/15 | - | 42/58/- | 1'30" |
| 8 | B | C8-10 alkyl polyglycoside | (2) | 40/20/40 | 5'50" |
| 9 | D | " " " | (2) | 33/17/50 | 3'30" |

| | | | | | |
|---|---|---|---|---|---|
| (1) A-Amioca waxy maize, 3% octenyl succinic anhydride (OSA) B-waxy maize-octenyl succinic anhydride (OSA) C-3% OSA modified waxy maize D-waxy maize, OSA, dextrin E-tapioca dextrin | | | | | |
| (2) glyphosate-IPA (isopropyl amine) | | | | | |
| (3)' = minutes " = seconds | | | | | |

### EXAMPLE 6

Several samples containing different starches with glyphosate-IPA (isopropyl amine) active material and Tween 20 adjuvant were prepared as solutions using amounts of active/adjuvant of 2/1 and active/adjuvant/starch of 2/1/1.3. These samples were tested for rainfastness by applying them to target weeds (velvetleaf - Abutilon theophrasti) using amounts of glyphosate-IPA active of 0.54 lb acid equivlaent (a.e.)/acre (600g. a.e./ha) (low dose) and 0.9 lb a.e./acre (1000g. a.e./ha) (high dose). The samples were applied by forming solutions and spraying at 21.4 gal/acre (200l/ha). Rainfall was applied 1 hr. after treatment at 3 min./hr. for 1 hour. The results in Table 8 and Table 9 show the effects of rain, expressed as % kill, on the different starch formulations and the resulting fresh weight amount of remaining plant tissue 20 days after treatment (DAT).

**Table 8 Effect of Rain on Starch formulations applied on Abutilon theophrasti 20 DAT**

| % Kill | | | | |
|---|---|---|---|---|
| | Low Dose | | High Dose | |
| Starch | No Rain | Rain | No Rain | Rain |
| None | 60.71 | 32.14 | 96.43 | 42.86 |
| (1) | 75 | 39.29 | 100 | 53.57 |
| (2) | 82.14 | 42.86 | 92.86 | 60.71 |
| Sago | 96.43 | 42.86 | 100 | 53.57 |
| (3) | 75 | 42.86 | 96.43 | 46.43 |

| | | | | |
|---|---|---|---|---|
| (1) 6% octenyl succinic anhydride (OSA) modified waxy maize | | | | |
| (2) 70WF, 3% OSA modified waxy maize | | | | |
| (3) 75WF, 3% OSA modified corn starch | | | | |

As shown in Table 8, the starch containing spray solutions improved the rainfastness resulting in an increased % Kill at both the low dose and high dose.

**Table 9 Fresh Weight of Abutilon theophrasti 20 Days After Treatment (DAT)**

| % Fresh Weight | | | | |
|---|---|---|---|---|
| | Low Dose | | High Dose | |
| Starch | No Rain | Rain | No Rain | Rain |
| None | 28.29 | 60.62 | 15.23 | 50.9 |
| (1) | 22.1 | 68,58 | 15.51 | 36.1 |
| (2) | 19.76 | 52.07 | 13.57 | 35.82 |
| Sago | 13.99 | 55.83 | 10.7 | 38.99 |
| (3) | 23.89 | 60.17 | 9.97 | 42.29 |

| | | | | |
|---|---|---|---|---|
| (1) 6% octenyl succinnic anhydride (OSA) modified waxy maize | | | | |
| (2) 70WF, 3% OSA modified waxy maize | | | | |
| (3) 75WF, 3% OSA modified corn starch | | | | |

As shown in Table 9, the starch containing spray solutions improved rainfastness resulting in reduced % Fresh Weight.

### EXAMPLE 7

Several starch samples containing Atplus MBA 13/15 (C12-C15 monobranched ethoxylated alcohol) surfactant were prepared as powders, as in the above examples, and identified below in Table 10. Two of the samples, D and E, are made by a process where a porous drum dried or spray dried starch particle is made containing no load. Subsequently a non-aqueous liquid or molten load component is absorbed into the porous structures to give a stable loaded particulate. These powders containing the starch entrapped surfactant were tested for the effect on azoxystrobin fungicide activity against Septoria tritici fungus on winter wheat. In one sample, the azoxystrobin was applied as a control using 0.5 l/ha of a commercial formulation Quadris (Syngenta) which contained 250 g/l of azoxystrobin (no surfactant), sample C. Additional treatments were carried out applying 0.5 l/ha of the commercial formulation Quadris containing 250 g/l of azoxystrobin and 0.1% weight by volume (of the spray volume), of the starch entrapped surfactant (samples A, B and D-E) and another comparative sample containing the fungicide plus surfactant without starch (sample C-1). These samples were applied to winter wheat c v Riband by spraying at 200 l/ha. The % infection remaining was determined on the second (2) and third (3) leafs of the treated plants, 25 days after inoculation and are shown in Table 11.

**Table 10**

| Sample | Starch | Ratio starch/surfactant |
|---|---|---|
| A | 3% OSA modif. waxy maize | 50/50 |
| B | cationic crosslinked waxy maize | 50/50 |
| D | puffed, spray dried waxy maize | 50/50 |
| E | tapioca dextrin | 50/50 |

**Table 11 Effect of Starch/Surfactant with Fungicide on Winter Wheat**

| Sample | % Infection | |
|---|---|---|
| | Leaf 2 | Leaf 3 |
| C (fungicide alone) | 16.6 | 40.0 |
| C-1 (fungicide/surfactant) | 4.7 | 33.0 |
| A (fungicide/starch/surfactant) | 0 | 16.5 |
| B (fungicide/starch/surfactant) | 1.8 | 10.4 |
| D (fungicide/starch surfactant) | 1.2 | 6.1 |
| E (fungicide/starch/surfactant) | 4.7 | 11.3 |

As shown by the results given in Table 11, the combination of starch and surfactant (samples A-E) increases the biological efficacy of the fungicide used alone (sample C) or the fungicide with surfactant (sample C-1).

### EXAMPLE 8

Starch sample A containing a 50/50 by weight ratio of a puffed, spray dried waxy maize and Atlox MBA 13/15 (C12-C15 monobranched ethoxylated alcohol) and starch sample B containing a 50/50 by weight ratio of tapioca dextrin and Atlox MBA 13/15 (C12-C15 monobranched ethoxylated alcohol) were prepared. The starch samples were prepared in a similar manner to samples D and E of Example 7. The prepared starch powders (A and B) were tested for the effect on azoxystrobin fungicide activity against Septoria tritici fungus on winter wheat (vagabond). Additional treatments were carried out using comparative samples which contained the azoxystrobin fungicide (250 g/l) with Atlox MBA 13/15 alone (C-1), Amistar, a commercial formulation which contained azoxystrobin (250 g/l) plus an adjuvant (C-2), and Quadris, a commercial formulation which contained azoxystrobin (250 g/l) alone (C-3). Samples A, B, C-1 and C-3 were prepared to deliver 187.5 g of the azoxystrobin per hectare and 300 ml of the adjuvant when applied to the winter wheat (vagabond) with a spray volume of 300 l/ha. Sample C-2 was prepared to deliver 250 g/l of the azoxystrobin per hectare when applied to winter wheat (vagabond) with a spray volume of 300 l/ha; concentration of the built-in adjuvant is unknown. The % infection was determined on the treated plants 1, 2 and 3 weeks after treatment (WAT) and the results are shown in Table 12.

**Table 12 Effect of Starch/Surfactant/Adjuvant with Fungicide on Winter Wheat**

| Sample (1) | % Infection | | |
|---|---|---|---|
| | 1 WAT | 2 WAT | 3 WAT |
| A | 22.5 | 23.1 | 21.7 |
| B | 25 | 25 | 25 |
| C-1 | 20 | 25 | 35 |
| C-2 | 27.5 | 22.5 | 30 |
| C-3 | 32.5 | 30 | 35 |

| | | | |
|---|---|---|---|
| (1) A - 50/50 waxy maize/Atlox MBA 13/15 and azoxystrobin B - 50/50 tapioca dextrin/Atlox MBA 13/15 and azoxystrobin C-1 - Atlox MBA 13/15 and azoxystrobin C-2 - adjuvant and azoxystrobin C-3 - azoxystrobin | | | |

The results in Table 12 show that the addition of the starch to surfactant/adjuvant (Samples A and B) extends the effectiveness of the fungicide in maintaining a lower % infection.

### EXAMPLE 9

This example illustrates the production of a solid formulation containing high loading of two (2) dissimilar active materials.

A cooked octenyl succinic anhydride (OSA) waxy maize starch/corn syrup was blended with aqueous glyphosate-IPA solution and then 2,4-D-2-ethylhexyl (liquid oil) was added (formulations given in Table 13 below). The formulations were subjected to high shear mixing until the particle size stabilized (i.e. reduced particle size to low level) and an emulsion formed. Water was added to reduce the viscosity to a level acceptable for atomization. The solution was spray dried in a Mobile Minor spray dryer to get a solid powder product. The powder was collected and then redispersed by mixing with water (3 g powder/100 ml water) with gentle agitation. The dispersion was then checked for emulsion stability, compatibility and emulsion/oil droplet size with the results given in Table 14.

**Table 13 Multiactive/Starch Formulations**

| | Formulations (w/w %) | | | |
|---|---|---|---|---|
| Components | F1 | F2 | F3 | F4 |
| Glyphosate - IPA | 20 | 25 | 27.5 | 20 |
| 2,4-D-2-ethylhexyl | 20 | 25 | 27.5 | 20 |
| Waxy maize, OSA/ corn syrup | 60 | 50 | 45 | |
| Waxy maize, OSA/ corn syrup | | | | 60 |

**Table 14 Multiactive/Starch Formulation Evaluations**

| | Formulations | | | |
|---|---|---|---|---|
| | F1 | F2 | F3 | F4 |
| Feedstock-PSD(1) (40% solids) | 0.468 | 0.699 | 0.55 | 0.431 |
| Redispers. powder-PSD (3% w/v) | 0.852 | 0.411 | 0.488 | 0.414 |
| Emulsion stability (after 24 hrs) (2) | | | | |
| water hardness | | | | |
| 50 ppm | TS | TS | TS | TS |
| 342 ppm | TS | TS | TS | TS |
| 1000 ppm | TS | TS | TS | TS |

| | | | | |
|---|---|---|---|---|
| (1) PSD - particle size distribution d(0.5) in micron | | | | |
| (2) TS- trace of sediment | | | | |

The emulsion/solutions evaluated were functionally homogenous, showed no creaming, phasing or separation (after 4 hours) and minimal sedimentation (TS - trace of sediment after 24 hours). The particle size of the redispersed powders were comparable to the corresponding feedstock. Neither the glyphosate nor the 2,4-D-2-ethylhexyl separated in the redispersed powder/granule.

The above describes the preparation of a stable solid product which contains two (2) dissimilar active materials, i.e. the water soluble glyphosphate-IPA and the non-water soluble 2,4-D-2-ethylhexyl material. The stable powder exhibited good emulsion properties.

## Claims

1. A stable, solid formulation comprising:
- a pregelatinized or gelatinized, chemically modified starch having film and/or matrix forming properties for binding the remaining ingredients, and
- a biologically active agricultural material,
- wherein from 30% to 70% by dry weight of starch is used in forming the formulation, and
- wherein from 30% to 70% by dry weight of remaining ingredients are used in forming the formulation,
- the formulation being readily dispersible in water and compatible when dispersed in water.

2. The stable, solid formulation of claim 1 further comprising a surfactant and/or adjuvant.

3. A stable, solid formulation comprising:
- a pregelatinized or gelatinized, chemically modified starch having film and/or matrix forming properties for binding the remaining ingredients; and
- a surfactant or non-oil adjuvant,
- wherein from 30% to 70% by dry weight of starch is used in forming the formulation, and
- wherein from 30% to 70% by dry weight of remaining ingredients are used in forming the formulation,
- the formulation being readily dispersible in water and compatible when dispersed in water.

4. The composition of any one of Claims 1-3 wherein the modified starch is a starch ester or starch ether.

5. The composition of Claim 4 wherein the starch is a starch ester prepared from an organic acid anhydride having a hydrophobic hydrocarbon group of 2 to 22 carbon atoms.

6. The composition of Claim 5 wherein the hydrocarbon group is selected from alkyl, alkenyl, aralkyl and aralkenyl groups.

7. The composition of Claim 6 wherein the hydrocarbon group has 5 to 18 carbon atoms.

8. The composition of Claim 4 wherein the starch is a starch ether prepared by modifying the starch with alkylene oxide having 2 to 6 carbon atoms.

9. The composition of Claim 8 wherein the starch is modified with up to 25% by weight of alkylene oxide which has 2 to 4 carbon atoms.

10. The composition of any one of claims 1-2 and 4-9 wherein the biologically active material is selected from the group consisting of herbicides, insecticides and fungicides.

11. The composition of any one of claims 2-10, wherein the surfactant is selected from the group consisting of alcohol alkoxylates having C8 to C18 alcohols, alkylamine alkoxylates having C8 to C18 alkylamines, sorbitol, sorbitan fatty acid esters having C8 to C18 fatty acid esters and their ethoxylated derivatives and chemically modified low molecular weight alkyl polysaccharides having C6 to C14 alkyl groups.

12. The composition of any one of claims 1-2 and 4-11, wherein the biologically active material is glyphosate.

13. The composition of any one of claims 2-12, wherein the surfactant is a C₆-C₁₄ alkyl polyglycoside.

14. The composition of any one of claims 1-2 and 4-13, wherein more than one of the biologically active materials are used.

15. The composition of any of the preceding claims, wherein more than one of the pregelatinized or gelatinized chemically modified starch and/or more than one of the surfactant/adjuvants are used.

16. The composition of any of claims 1-2 and 4-15, wherein the biologically active material is glyphosate or strobilurin.

17. The composition of any of claims 1-2 and 4-16, wherein the biologically active material is glyphosate-isopropyl amine or azoxystrobin.

18. The composition of any one of claims 2-17, wherein a non-ionic surfactant is used.

19. The composition of any one of claims 2-17, wherein the surfactant is an ethoxylated C8 to C18 alcohol.

20. An aqueous dispersion comprising the formulation of claims 1, 2, 4-19

21. A method of applying a biologically active agricultural material to agricultural crops, vegetation, weeds, plants, insects, pests and soil comprising applying an aqueous dispersion as defined an claim 20.

## Patentansprüche

1. Stabile, feste Formulierung, umfassend:
- eine vorgelatinierte oder gelatinierte, chemisch modifizierte Stärke, die Film- und/oder Matrix-bildende Eigenschaften hat, zur Bindung der restlichen Ingredienzien, und
- ein biologisches aktives landwirtschaftliches Material,
- wobei 30 bis 70 Trockengewichts-% an Stärke bei der Bildung der Formulierung verwendet werden und
- wobei 30 bis 70 Trockengewichts-% an restlichen Ingredienzien bei der Bildung der Formulierung verwendet werden,
- wobei die Formulierung in Wasser leicht dispergierbar und kompatibel ist, wenn sie in Wasser dispergiert wird.

2. Stabile, feste Formulierung nach Anspruch 1, die außerdem einen grenzflächenaktiven Stoff und/oder ein Adjuvans umfasst.

3. Stabile, feste Formulierung, umfassend:
- eine vorgelatinierte oder gelatinierte, chemisch modifizierte Stärke, die Film- und/oder Matrix-bildende Eigenschaften hat, zur Bindung der restlichen Ingredienzien, und
- einen grenzflächenaktiven Stoff oder ein Nicht-Öl-Adjuvans,
- wobei 30 bis 70 Trockengewichts-% an Stärke bei der Bildung der Formulierung verwendet werden und
- wobei 30 bis 70 Trockengewichts-% an restlichen Ingredienzien bei der Bildung der Formulierung verwendet werden,
- wobei die Formulierung in Wasser leicht dispergierbar und kompatibel ist, wenn sie in Wasser dispergiert wird.

4. Zusammensetzung nach einem der Ansprüche 1 bis 3, wobei die modifizierte Stärke ein Stärkeester oder ein Stärkeether ist.

5. Zusammensetzung nach Anspruch 4, wobei die Stärke ein Stärkeester ist, der aus einem organischen Säureanhydrid mit einer hydrophoben Kohlenwasserstoffgruppe mit 2 bis 22 Kohlenstoffatomen hergestellt wird.

6. Zusammensetzung nach Anspruch 5, wobei die Kohlenwasserstoffgruppe aus Alkyl-, Alkenyl-, Aralkyl- und Aralkenylgruppen ausgewählt ist.

7. Zusammensetzung nach Anspruch 6, wobei die Kohlenwasserstoffgruppe 5 bis 18 Kohlenstoffatome hat.

8. Zusammensetzung nach Anspruch 4, wobei die Stärke ein Stärkeether ist, der durch Modifizieren der Stärke mit Alkylenoxid mit 2 bis 6 Kohlenstoffatomen hergestellt wird.

9. Zusammensetzung nach Anspruch 8, wobei die Stärke mit bis zu 25 Gew.-% Alkylenoxid, das 2 bis 4 Kohlenstoffatome hat, modifiziert ist.

10. Zusammensetzung nach einem der Ansprüche 1 bis 2 und 4 bis 9, wobei das biologisch aktive Material aus der Gruppe, bestehend aus Herbiziden, Insektiziden und Fungiziden, ausgewählt ist.

11. Zusammensetzung nach einem der Ansprüche 2 bis 10, wobei der grenzflächenaktive Stoff aus der Gruppe, bestehend aus Alkoholalkoxylaten mit C₈-C₁₈-Alkoholen, Alkylaminalkoxylaten mit C₈-C₁₈-Alkylaminen, Sorbit, Sorbitanfettsäureestern mit C₈-C₁₈-Fettsäureestern und ihren ethoxylierten Derivaten und chemisch modifizierten niedermolekulargewichtigen Polysacchariden mit C₆-C₁₄-Alkylgruppen, ausgewählt ist.

12. Zusammensetzung nach einem der Ansprüche 1 bis 2 und 4 bis 11, wobei das biologisch aktive Material Glyphosat ist.

13. Zusammensetzung nach einem der Ansprüche 2 bis 12, wobei der grenzflächenaktive Stoff ein C₆-C₁₄-Alkylpolyglycosid ist.

14. Zusammensetzung nach einem der Ansprüche 1 bis 2 und 4 bis 13, wobei mehr als eines der biologisch aktiven Materialien verwendet wird.

15. Zusammensetzung nach einem der vorangehenden Ansprüche, wobei mehr als eine der vorgelatinierten oder gelatinierten, chemisch modifizierten Stärken und/oder mehr als eine der grenzflächenaktiven Stoffe/Adjuvanzien verwendet wird.

16. Zusammensetzung nach einem der Ansprüche 1 bis 2 und 4 bis 15, wobei das biologisch aktive Material Glyphosat oder Strobilurin ist.

17. Zusammensetzung nach einem der Ansprüche 1 bis 2 und 4 bis 16, wobei das biologisch aktive Material Glyphosat-Isopropylamin oder Azoxystrobin ist.

18. Zusammensetzung nach einem der Ansprüche 2 bis 17, wobei ein nichtionischer grenzflächenaktiver Stoff verwendet wird.

19. Zusammensetzung nach einem der Ansprüche 2 bis 17, wobei der grenzflächenaktive Stoff ein ethoxylierter C₈-C₁₈-Alkohol ist.

20. Wässrige Dispersion, die die Formulierung nach den Ansprüchen 1, 2, 4 bis 19 umfasst.

21. Verfahren zum Aufbringen eines biologisch aktiven landwirtschaftlichen Materials auf landwirtschaftliche Kulturpflanzen, Vegetation, Unkräuter, Pflanzen, Insekten, Schädlinge und Erde, umfassend Aufbringen einer wässrigen Dispersion, wie sie in Anspruch 20 definiert ist.

## Revendications

1. Formulation solide stable comprenant :
- un amidon prégélatinisé ou gélatinisé, modifié chimiquement, ayant des propriétés de formation de film et/ou de matrice pour lier les ingrédients restants, et
- une matière agricole biologiquement active,
- dans laquelle on utilise de 30 % à 70 % en poids à sec d'amidon pour former la formulation, et
- dans laquelle on utilise de 30 % à 70 % en poids à sec des ingrédients restants pour former la formulation,
- la formulation étant facilement dispersable dans l'eau et compatible quand elle est dispersée dans de l'eau.

2. Formulation solide stable selon la revendication 1, comprenant en outre un agent tensioactif et/ou un adjuvant.

3. Formulation solide stable comprenant :
- un amidon prégélatinisé ou gélatinisé, modifié chimiquement, ayant des propriétés de formation de film et/ou de matrice pour lier les ingrédients restants ; et
- un agent tensioactif ou un adjuvant non huileux,
- dans laquelle on utilise de 30 % à 70 % en poids à sec d'amidon pour former la formulation, et
- dans laquelle on utilise de 30 % à 70 % en poids à sec des ingrédients restants pour former la formulation,
- la formulation étant facilement dispersable dans l'eau et compatible quand elle est dispersée dans de l'eau.

4. Composition selon l'une quelconque des revendications 1 à 3, dans laquelle l'amidon modifié est un ester d'amidon ou un éther d'amidon.

5. Composition selon la revendication 4, dans laquelle l'amidon est un ester d'amidon préparé à partir d'un anhydride d'acide organique ayant un groupe hydrocarboné hydrophobe ayant 2 à 22 atomes de carbone.

6. Composition selon la revendication 5, dans laquelle le groupe hydrocarboné est choisi parmi les groupes alkyle, alcényle, aralkyle et aralcényle.

7. Composition selon la revendication 6, dans laquelle le groupe hydrocarboné a 5 à.18 atomes de carbone.

8. Composition selon la revendication 4, dans laquelle l'amidon est un éther d'amidon préparé par modification de l'amidon avec de l'oxyde d'alkylène ayant 2 à 6 atomes de carbone.

9. Composition selon la revendication 8, dans laquelle l'amidon est modifié avec jusqu'à 25 % en poids d'oxyde d'alkylène qui a 2 à 4 atomes de carbone.

10. Composition selon l'une quelconque des revendications 1 et 2 et 4 à 9, dans laquelle la matière biologiquement active est choisie dans l'ensemble constitué d'herbicides, insecticides et fongicides.

11. Composition selon l'une quelconque des revendications 2 à 10, dans laquelle l'agent tensioactif est choisi dans l'ensemble constitué d'alcoxylates d'alcool ayant des alcools en C₈ à C₁₈, d'alcoxylates d'alkylamine ayant des alkylamines en C₈ à C₁₈, du sorbitol, d'esters d'acides gras et de sorbitanne ayant des esters d'acides gras en C₈ à C₁₈ et leurs dérivés éthoxylés et de polysaccharides d'alkyle de poids moléculaire bas modifiés chimiquement ayant des groupes alkyle en C₆ à C₁₄.

12. Composition selon l'une quelconque des revendications 1 et 2 et 4 à 11, dans laquelle la matière biologiquement active est du glyphosate.

13. Composition selon l'une quelconque des revendications 2 à 12, dans laquelle l'agent tensioactif est un polyglycoside d'alkyle en C₆ à C₁₄.

14. Composition selon l'une quelconque des revendications 1 et 2 et 4 à 13, dans laquelle on utilise plusieurs des matières biologiquement actives.

15. Composition selon l'une quelconque des revendications précédentes, dans laquelle on utilise plus d'un amidon prégélatinisé ou gélatinisé modifié chimiquement et/ou plus d'un agent tensioactif/adjuvants.

16. Composition selon l'une quelconque des revendications 1 et 2 et 4 à 15, dans laquelle la matière biologiquement active est du glyphosate ou de la strobilurine.

17. Composition selon l'une quelconque des revendications 1 et 2 et 4 à 16, dans laquelle la matière biologiquement active est du glyphosate-isopropylamine ou de l'azoxystrobine.

18. Composition selon l'une quelconque des revendications 2 à 17, dans laquelle on utilise un agent tensioactif non ionique.

19. Composition selon l'une quelconque des revendications 2 à 17, dans laquelle l'agent tensioactif est un alcool éthoxylé en C₈ à C₁₈.

20. Dispersion aqueuse comprenant la formulation selon les revendications 1, 2 et 4 à 19.

21. Procédé d'application d'une matière agricole biologiquement active à des cultures agricoles, une végétation, des graines, des plantes, des insectes, des organismes nuisibles et au sol, comprenant l'application d'une dispersion aqueuse telle que définie dans la revendication 20.
